(19)

Europäisches Patentamt

European Patent Office

Office européen des brevets

(11) **EP 2 960 788 A2**

(12) **EUROPEAN PATENT APPLICATION**

(43) Date of publication:
**30.12.2015 Bulletin 2015/53**

(51) Int Cl.:
***G06F 9/50*** (2006.01)

(21) Application number: **15170551.4**

(22) Date of filing: **03.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **13.06.2014 JP 2014122621**

(71) Applicant: **FUJITSU LIMITED**
**Kawasaki-shi,**
**Kanagawa 211-8588 (JP)**

(72) Inventor: **IMADE, Hiroaki**
**Kawasaki-shi, Kanagawa 211-8588 (JP)**

(74) Representative: **Lewin, David Nicholas**
**Haseltine Lake LLP**
**Lincoln House, 5th Floor**
**300 High Holborn**
**London WC1V 7JH (GB)**

(54) **PARALLEL COMPUTER SYSTEM, CONTROL METHOD, AND JOB MANAGEMENT PROGRAM**

(57) A plurality of nodes is provided with N-dimensional coordinates identified by N coordinate axes, and a connection relation of the nodes is managed using the N-dimensional coordinates. A management apparatus detects an available free node group from the plurality of nodes, upon acquiring a processing request having specified therein a number of nodes for each coordinate axis for a node group to be used for processing, and converts the number of nodes of two or more coordinate axes out of the number of nodes of the N coordinate axes specified in the processing request, according to the number of nodes aligned in each coordinate axis direction of the free node group. The management apparatus allocates nodes included in the free node group to the processing request, according to the converted number of nodes for each coordinate axis.

FIG. 1

**Description**

FIELD

The embodiments discussed herein relate to a parallel computer system, a control method, and a job management program.

BACKGROUND

When performing a large scale computation such as scientific computation, there may be used a parallel computer system provided with a plurality of nodes having computing resources such as a processor or a memory, the plurality of nodes being connected by a network. In a parallel computer system, each node may perform processing in parallel with other nodes, and may also exchange data with other nodes.

As one form (network topology) of interconnecting a plurality of nodes, direct networks such as mesh and torus may be exemplified. In a direct network, nodes are directly connected to one another without any independent switches intervening therebetween, each node being provided with a routing function which transfers data according to destination nodes. A mesh or torus type parallel computer system may be regarded as having a plurality of nodes logically arranged in a lattice shape, the position of each node being identifiable by N-dimensional coordinates determined by N orthogonal coordinate axes (N is an integer of 2 or more).

When causing a parallel computer system to perform a set of processes referred to as a job (submit a job), a node to be used for performing the job is selected from among the nodes included in the parallel computer system. There is proposed, with regard to allocation of a node, an HPC (High Performance Computing) server configured to manage jobs. The HPC server detects, from a 3-dimensional torus, a non-allocated subset which is a group of nodes which have not been allocated to any job. When a new job is submitted, the HPC server determines whether or not there exists a non-allocated subset appropriate for performing the job and, when there exists one, allocates the non-allocated subset to the job. When, on the other hand, there is no appropriate non-allocated subset, the HPC server stores the submitted job in a job queue and waits until another job is completed.

In addition, there is proposed a parallel processing apparatus configured to allocate, when a job including a plurality of tasks as processing elements is submitted, the tasks to a plurality of nodes in a distributed manner. The parallel processing apparatus acquires performance information from each node during execution of a job. The parallel processing apparatus predicts, among task allocation patterns, a pattern which allows the job to be performed at a high speed, based on the acquired performance information. When the execution speed of a job is expected to become faster than now, owing to the predicted allocation pattern, the parallel processing apparatus interrupts the job and changes the allocation of the tasks to the nodes.

In addition, there is proposed a scheduling apparatus configured to instruct a mesh type parallel computer system to perform a job. The scheduling apparatus reserves a rectangular sub-mesh which is a part of a mesh-shaped node set for a job with a high priority out of the waiting jobs. On this occasion, the scheduling apparatus detects interference between jobs, using a 2-dimensional array indicating presence or absence of job allocation, and determines a sub-mesh to be reserved.

Japanese Laid-Open Patent Publication No. 2005-310139

Japanese Laid-Open Patent Publication No. 2010-257056

Japanese Laid-Open Patent Publication No. 2010-267025

In a parallel computer system having a lattice-shaped interconnection network, the cost of communication between nodes depends on the positions of the source node and the destination node. Therefore, the execution efficiency of a job using a plurality of nodes depends not only on the total number of nodes to be used but also on the number of nodes aligned in each coordinate axis direction (geometry of the node group). For example, in a 2-dimensional mesh or a 2-dimensional torus, the execution efficiency of a job may be different between a case where 4x3 nodes are used and a case where 2x6 nodes are used. A desirable geometry of a node group is different for each job. Accordingly, when submitting a job in a parallel computer system, the geometry of the node group may be explicitly specified from the job submitting source such as a user terminal apparatus or a scheduling apparatus.

However, even when there exists in the parallel computer system a free node group corresponding to the total number of nodes requested by the job, there is a possibility that the nodes are not able to be allocated to the job as they are, when the geometry of the free node group is different from the specified geometry. For example, even when there exist a free node group of 2x6 nodes in a parallel computer system, there is a possibility that the nodes are not able to be allocated to a job for which a 4x3 geometry has been specified. Causing a job to wait on the basis of a determination that allocation of nodes is impossible in such a situation may result in the problem of a reduced operating rate of nodes and a lowered throughput of the parallel computer system.

SUMMARY

According to an aspect, it is desirable to provide a parallel computer system, a control method, and a job management program which are capable of improving the operating rate of nodes.
According to an embodiment, there is provided a parallel computer system including: a plurality of nodes which is provided with N-dimensional coordinates identified by N (N is an integer of 2 or more) coordinate axes and a connection relation of which is managed using the N-dimensional coordinates; and a management apparatus configured to detect an available free node group from among the plurality of nodes, upon acquiring a processing request having specified therein a number of nodes for each coordinate axis for a node group to be used for processing, convert a number of nodes of two or more coordinate axes out of a number of nodes of the N coordinate axes specified in the processing request, according to a number of nodes aligned in each coordinate axis direction of the free node group, and allocate nodes included in the free node group to the processing request, according to the converted number of nodes for each coordinate axis.

BRIEF DESCRIPTION OF DRAWINGS

FIG. 1 illustrates a parallel computer system of a first embodiment;
FIG. 2 illustrates a parallel computer system of a second embodiment;
FIG. 3 illustrates an exemplary hardware configuration of a management apparatus;
FIG. 4 illustrates an exemplary hardware configuration of nodes;
FIG. 5 illustrates a problem with node allocation;
FIG. 6 illustrates an exemplary function of the parallel computer system;
FIG. 7 illustrates an exemplary request table;
FIG. 8 illustrates an exemplary communication table;
FIG. 9 is a flowchart illustrating an exemplary procedure of allocating 2-dimensional nodes to a job;
FIGS. 10A to 10C illustrate a specific example of a procedure of allocating 2-dimensional nodes to a job;
FIG. 11 illustrates a specific example (continued) of the procedure of allocating 2-dimensional nodes to a job;
FIG. 12 is a flowchart illustrating an exemplary procedure of allocating 3-or-more dimensional nodes to a job; and
FIG. 13 is a flowchart illustrating an exemplary procedure of identifying the transformation pattern of the job geometry.

DESCRIPTION OF EMBODIMENTS

Several embodiments will be described below with reference to the accompanying drawings, wherein like reference numerals refer to like elements throughout.

(First Embodiment)

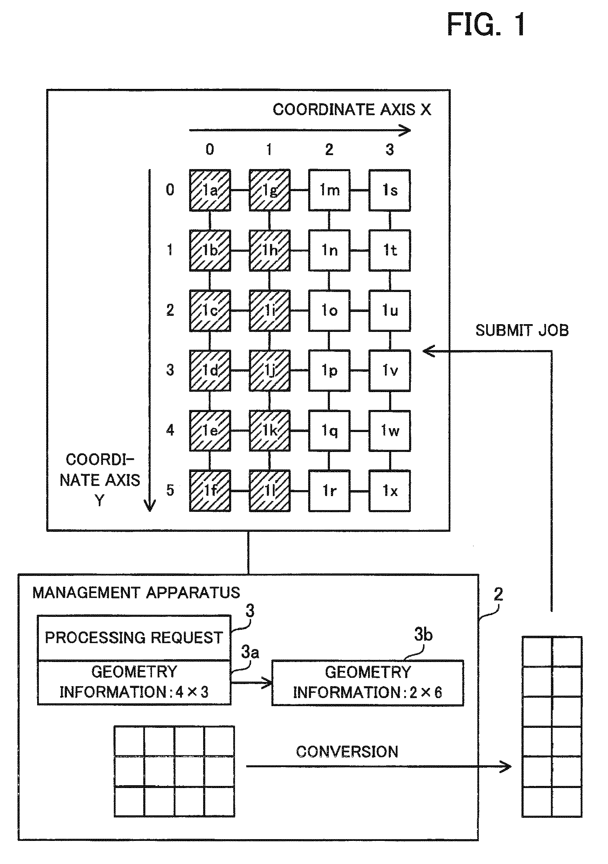

FIG. 1 illustrates a parallel computer system of a first embodiment.
The parallel computer system of the first embodiment has a plurality of nodes including nodes 1a to 1x, and a management apparatus 2. The nodes 1a to 1x are processing entities capable of performing processes in parallel. The nodes 1a to 1x may each have a processor such as a CPU (Central Processing Unit) and a memory such as a RAM (Random Access Memory). In such a case, the processor executes a program stored in the memory. The management apparatus 2 manages submitting of jobs which is a set of processes. The management apparatus 2 may be a computer having a processor and a memory. In such a case, processing by the management apparatus 2 described below may be implemented as a program. In addition, the management apparatus 2 may be a user-operated client apparatus, or may be a server apparatus accessed from a client apparatus.
The plurality of nodes including the nodes 1a to 1x is connected by a lattice-shaped N-dimensional (N is an integer of 2 or more) interconnection network to be communicable with one another. There is an N-dimensional mesh or an N-dimensional torus as an exemplary interconnection network. Each node is provided with N-dimensional coordinates which are identified by N coordinate axes (e.g., mutually perpendicular N coordinate axes) and which are different from those of other nodes. Connection relation between nodes is managed using the N-dimensional coordinates. For example, each node is directly connected to other nodes whose values of any one of the coordinate axes differ by one. The data transfer destination at the time of routing may be determined using the N-dimensional coordinates.
As an example, FIG. 1 illustrates an exemplary 2-dimensional interconnection network identified by the coordinate axes X and Y. Nodes 1a to 1f are provided with coordinates (0,0), (0,1), (0,2), (0,3), (0,4) and (0,5), respectively. Nodes 1g to 1l are provided with coordinates (1,0), (1,1), (1,2), (1,3), (1,4) and (1,5), respectively. Nodes 1m to 1r are provided with coordinates (2,0), (2,1), (2,2), (2,3), (2,4) and (2,5), respectively. Nodes Is to 1x are provided with coordinates (3,0), (3,1), (3,2), (3,3), (3,4) and (3,5), respectively.

Here, it is assumed that the nodes 1a to 1l are nodes in use which have been allocated to an existing job and will not be allocated to a new job unless the current job is completed. On the other hand, it is assumed that the nodes 1m to 1x are free nodes, which are allocatable to a new job. For simplicity of explanation, it is assumed that one node is allocated to one job. In addition, it is assumed that one job uses a node group including two or more successive (unseparated) nodes. Each node to be used has allocated thereto a process specified by the job. Accordingly, two or more processes belonging to one job are performed in parallel.

The management apparatus 2 acquires a processing request 3 indicating a request of submitting a new job. The processing request 3 may be input to the management apparatus 2 by a user operation, or may be received from another apparatus via a network. The processing request 3 includes geometry information 3a indicating the geometry of the node group to be used for processing. The geometry information 3a specifies the number of nodes aligned in the direction of each of the N coordinate axes. For example, "4x3" indicates a rectangular node group including four nodes aligned in the direction of the X-coordinate axis and three nodes aligned in the direction of the Y-coordinate axis. In such a case, the total number of nodes requested by the processing request 3 turns out to be $4 \times 3 = 12$.

Upon acquiring the processing request 3, the management apparatus 2 detects an available free node group from among a plurality of nodes including the nodes 1a to 1x. In the case of the example of FIG. 1, the management apparatus 2 detects a 2x6 free node group which is a set of nodes 1m to 1x. The management apparatus 2 determines whether or not the geometry of the detected free node group includes the geometry of the node group requested by the processing request 3, in other words, whether or not the number of nodes in the free node group for each coordinate axis is equal to or larger than the number of nodes specified in the geometry information 3a. When the aforementioned condition is satisfied, the management apparatus 2 may select a node group having the geometry specified in the geometry information 3a from the free node group, and allocate it to a job.

When, on the other hand, the aforementioned condition is not satisfied, the management apparatus 2 converts the geometry information 3a into geometry information 3b, according to the number of nodes aligned in each coordinate axis direction of the free node group. The geometry information 3b results from converting the number of nodes specified in the geometry information 3a for two or more coordinate axes out of the N coordinate axes. The conversion of the number of nodes is performed so that the aforementioned condition is satisfied, i.e., so that the number of nodes specified in the geometry information 3b for each coordinate axis is equal to or smaller than the number of nodes in the free node group. Preferably, the management apparatus 2 reduces the number of nodes of a certain coordinate axis, and increases the number of nodes of another coordinate axis so that the total number of nodes requested by the processing request 3 does not change.

On this occasion, the management apparatus 2 may factorize the number of nodes of a certain coordinate axis and move one of the factors acquired by the factorization to another coordinate axis. In the example of FIG. 1, "4x3" is converted into "2x6". This conversion decreases the number of nodes of the X-coordinate axis specified in the geometry information 3a and increases the number of nodes of the Y-coordinate axis specified in the geometry information 3a, without changing the total number (12) of nodes. In addition, it may be regarded as moving "2", which is one of the factors of the number of nodes "4" of the X-coordinate axis, from the X-coordinate axis to the Y-coordinate axis.

The management apparatus 2 then allocates the nodes included in the free node group to the job, according to the converted number of nodes for each coordinate axis specified in the geometry information 3b. In the example of FIG. 1, the geometry of the free node group is $2 \times 6$, which is a set of the nodes 1m to 1x, and the geometry of the node group specified in the geometry information 3b is 2x6. Therefore, the management apparatus 2 may allocate the nodes 1m to 1x to the job requested by the processing request 3.

Despite that there exists a free node group corresponding to the total number of nodes requested by the processing request 3 in the parallel computer system, there is a possibility that, when the geometry of the free node group is different from the specified geometry, execution of the job is not able to be started as it is. Although there are 12 free nodes in the parallel computer system in the example of FIG. 1, there is no free node group that may accommodate "4x3". Accordingly, the job indicated by the processing request 3 may be put into a wait state without being started.

In contrast, the parallel computer system of the first embodiment converts the geometry of the node group specified by the processing request 3 according to the geometry of the detected free node group to make the job executable. Accordingly, the operating rate of the nodes of the parallel computer system rises, and whereby the throughput increases. In addition, the wait time of the job may be reduced, and whereby the response time may be shortened.

(Second Embodiment)

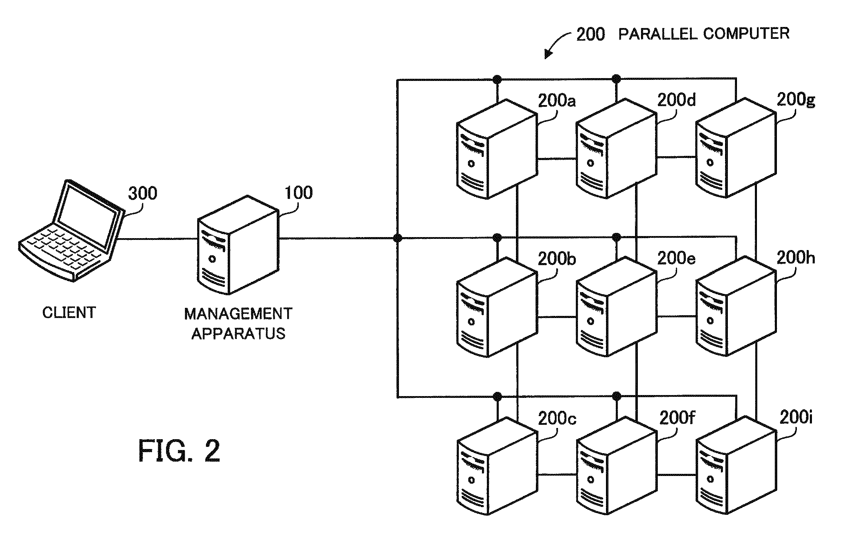

FIG. 2 illustrates a parallel computer system of a second embodiment. The parallel computer system of the second embodiment has a management apparatus 100, a parallel computer 200, and a client 300. The parallel computer 200 has a plurality of nodes including nodes 200a to 200i. The management apparatus 100 and the client 300 are connected via a user-access network. The user-access network may include a wide area network such as the Internet. The management apparatus 100 and the nodes 200a to 200i are connected via a management network. The management network is, for example, a local network within a data center in which the nodes 200a to 200i are installed. However, the user access network and the management network need not be separated.

The management apparatus 100 controls submitting of jobs to the parallel computer 200. For example, the management apparatus 100 is a server computer. The management apparatus 100 receives job information from the client 300. The job information requests execution of a job including a plurality of processes to be performed in parallel, and includes information relating to the number of nodes used by the job. The management apparatus 100 selects a plurality of nodes from the parallel computer 200 based on the received job information, allocates the nodes to the job, and starts execution of the job.

A plurality of nodes including the nodes 200a to 200i is connected by a lattice-shaped interconnection network which is different from the management network to be communicable with one another. There is a mesh or a torus as an exemplary interconnection network. The connection relation between nodes of the parallel computer 200 is managed using N-dimensional coordinates (N is an integer of 2 or more). Each node is provided with N-dimensional coordinates which are different from those of other nodes. Each node is directly connected to other nodes (2N nodes at most) whose values of any one of the coordinate axes differ by one. When transmitting data from one node (source node) to another node (destination node), a node located in between relays the data according to the coordinates of the destination node when the source node and the destination node are not directly connected.

FIG. 2 illustrates an example in which the nodes 200a to 200i are interconnected using a 2-dimensional mesh defined by two coordinate axes, namely X-axis and Y-axis. For example, the node 200e is directly connected to the node 200b in the negative direction of the X-axis and directly connected to the node 200h in the positive direction of the X-axis. In addition, the node 200e is directly connected to the node 200f in the negative direction of the Y-axis and directly connected to the node 200d in the positive direction of the Y-axis.

Similarly, the node 200a is directly connected to the nodes 200b and 200d, the node 200b is directly connected to the nodes 200a, 200c and 200e, and the node 200c is directly connected to the nodes 200b and 200f. The node 200d is directly connected to the nodes 200a, 200e and 200g, and the node 200f is directly connected to the nodes 200c, 200e and 200i. The node 200g is directly connected to the nodes 200d and 200h, the node 200h is directly connected to the nodes 200e, 200g and 200i, and the node 200i is directly connected to the nodes 200f and 200h.

When the nodes 200a to 200i are interconnected using a 2-dimensional torus, the nodes 200a, 200c, 200g and 200i are directly connected to still another node for each coordinate axis. For example, the node 200a may be further connected to the nodes 200c and 200g. When, in addition, a plurality of nodes is interconnected using a 3-dimensional mesh or a 3-dimensional torus, each node is directly connected to at most six other nodes.

The client 300 is a terminal used by a user. For example, the client 300 is a client computer. The client 300 transmits job information to the management apparatus 100 when using the parallel computer 200 for performing a job. The job information includes information relating to the number of nodes to be used, information indicating the arrangement of processes to a plurality of nodes, specification of a file of a program (e.g., a path of the file) to be used for activating a process, or the like.

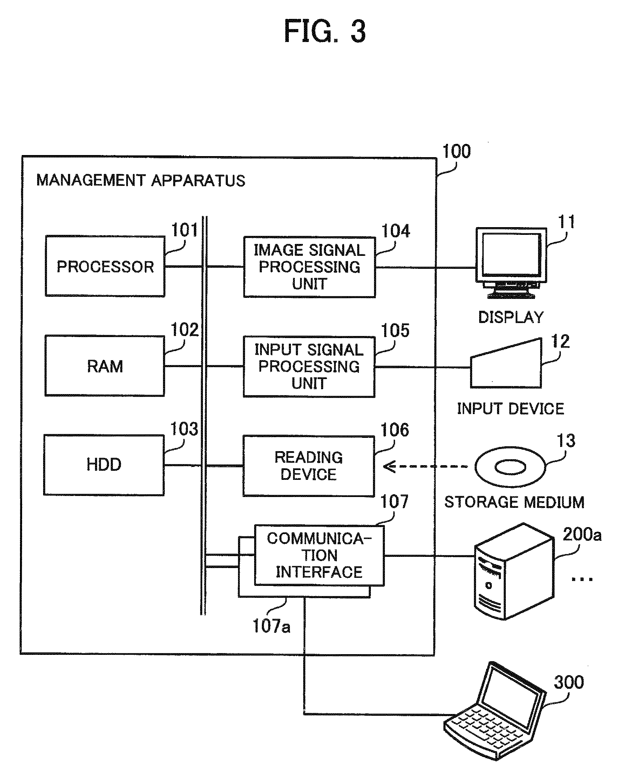

FIG. 3 illustrates an exemplary hardware configuration of the management apparatus. The management apparatus 100 has a processor 101, a RAM 102, an HDD (Hard Disk Drive) 103, an image signal processing unit 104, an input signal processing unit 105, a reading device 106, and communication interfaces 107 and 107a. Each unit is connected to a bus of the management apparatus 100.

The processor 101 controls the entire management apparatus 100. The processor 101 may be a multiprocessor including a plurality of processing elements. The processor 101 is, for example, a CPU, a DSP (Digital Signal Processor), an ASIC (Application Specific Integrated Circuit), an FPGA (Field Programmable Gate Array), or the like. In addition, the processor 101 may be a combination of two or more elements including a CPU, a DSP, an ASIC, an FPGA, and the like.

The RAM 102 is the main storage device of the management apparatus 100. The RAM 102 temporarily stores at least a part of the OS (Operating System) program or application programs to be executed by the processor 101. In addition, the RAM 102 stores various data to be used for processing by the processor 101.

The HDD 103 is an auxiliary storage device of the management apparatus 100. The HDD 103 magnetically writes and reads data to and from a built-in magnetic disk. The HDD 103 stores the OS program, application programs, and various data. The management apparatus 100 may have another type of auxiliary storage device such as a flash memory or an SSD (Solid State Drive), or may have a plurality of auxiliary storage devices.

The image signal processing unit 104 outputs images to a display 11 connected to the management apparatus 100 according to an instruction from the processor 101. A variety of displays such as a CRT (Cathode Ray Tube) display, a liquid crystal display (LCD), an organic EL (Electro-Luminescence) display, or the like, may be used as the display 11.

The input signal processing unit 105 acquires an input signal from an input device 12 connected to the management apparatus 100, and outputs the input signal to the processor 101. A pointing device such as a mouse or a touch panel, as well as a variety of input devices such as a keyboard may be used as the input device 12. A plurality of types of input devices may be connected to the management apparatus 100.

The reading device 106 is a device configured to read programs or data stored on a storage medium 13. A magnetic disk such as a Flexible Disk (FD) or an HDD, an optical disk such as a CD (Compact Disc) or a DVD (Digital Versatile Disc), a Magneto-Optical disk (MO) or the like, for example, may be used as the storage medium 13. In addition, a nonvolatile semiconductor memory such as a flash memory card, for example, may be used as the storage medium 13. According to an instruction from the processor 101, for example, the reading device 106 stores, in the RAM 102 or the HDD 103, programs or data which have been read from the storage medium 13.

The communication interface 107 is connected to the nodes 200a to 200i via the management network to transmit and receive data. The communication interface 107a is connected to the client 300 to transmit and receive data. However, the communication interface 107 and the communication interface 107a may be identical.

The client 300 may also be realized by a similar hardware configuration to that of the management apparatus 100.

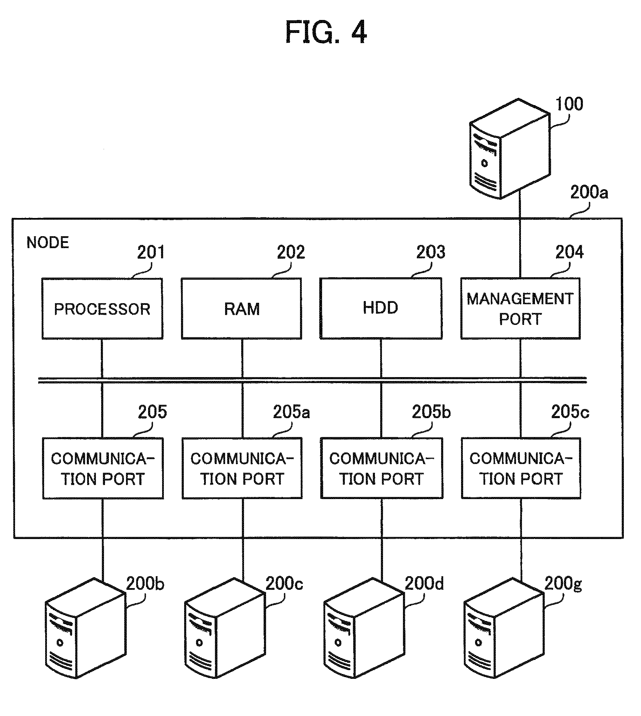

FIG. 4 illustrates an exemplary hardware configuration of nodes. The nodes 200a to 200i may be realized by similar hardware configurations. Therefore, the hardware configuration of the node 200a will be described here.

The node 200a has a processor 201, a RAM 202, an HDD 203, a management port 204, and communication ports 205, 205a, 205b and 205c. Each unit is connected to a bus of the node 200a.

The Processor 201 controls the entire node 200a. The processor 201 may be a multiprocessor including a plurality of processing elements. The processor 201 is a CPU, a DSP, an ASIC, or an FPGA, for example. The processor 201 may be a combination of two or more elements including a CPU, a DSP, an ASIC, an FPGA, and the like.

The RAM 202 is the main storage device of the node 200a. The RAM 202 temporarily stores at least a part of the OS program or application programs to be executed by the processor 201. In addition, the RAM 202 stores various data to be used for processing by the processor 201.

The HDD 203 is an auxiliary storage device of the node 200a. The HDD 203 magnetically writes and reads data to and from a built-in magnetic disk. The HDD 203 stores the OS program, application programs, and various data. The node 200a may have another type of auxiliary storage device such as a flash memory or an SSD, or may have a plurality of auxiliary storage devices.

The management port 204 is an interface configured to transmit and receive data to and from the management apparatus 100 via the management network.

The communication ports 205, 205a, 205b and 205c are interfaces configured to transmit and receive data to and from other nodes directly connected to the node 200a. The communication port 205 is directly connected to the node 200b, the communication port 205a is directly connected to the node 200c, the communication port 205b is directly connected to the node 200d, and the communication port 205c is directly connected to the node 200g.

The node 200a is able to transmit, receive, and transfer data to and from other nodes, using the communication ports 205, 205a, 205b and 205c. Upon generating data, the node 200a determines the direction in which the data approaches the destination node from the coordinates of the node 200a and the coordinates of the destination node, and outputs the data from a communication port located in the determined direction.

In addition, upon receiving data from one of the communication ports, the node 200a checks the coordinates of the destination node of the received data. The ccoordinates of the destination node may be added to the data. When the destination node is the node 200a, the node 200a imports the received data in the node 200a. When, on the other hand, the destination node is another node, the node 200a determines the direction in which the data approaches the destination node from the coordinates of the node 200a and the coordinates of the destination node, and outputs the data from a communication port located in the determined direction.

When determining the direction in which the data approaches the destination node from the node 200a, the node 200a may preliminarily determine, among a plurality of dimensions, a dimension in which the difference between the coordinates is preferentially reduced. When the coordinates of the node 200a and the coordinates of the destination node do not match in both the X-dimension and the Y-dimension, it is conceivable for the node 200a to transfer data to the direction in which the difference between the coordinates of the X-dimension is reduced. For example, upon generating or receiving data whose destination node is the node 200e, the node 200a transfers data to the node 200d which is adjacent in the direction of the X-dimension.

Data transfer control using the communication ports 205, 205a, 205b and 205c may be performed by the processor 201 using software, or may be performed by a switching circuit which is a hardware unit different from the processor 201.

Next, a problem that arises when allocating nodes to a job according to job information will be described.

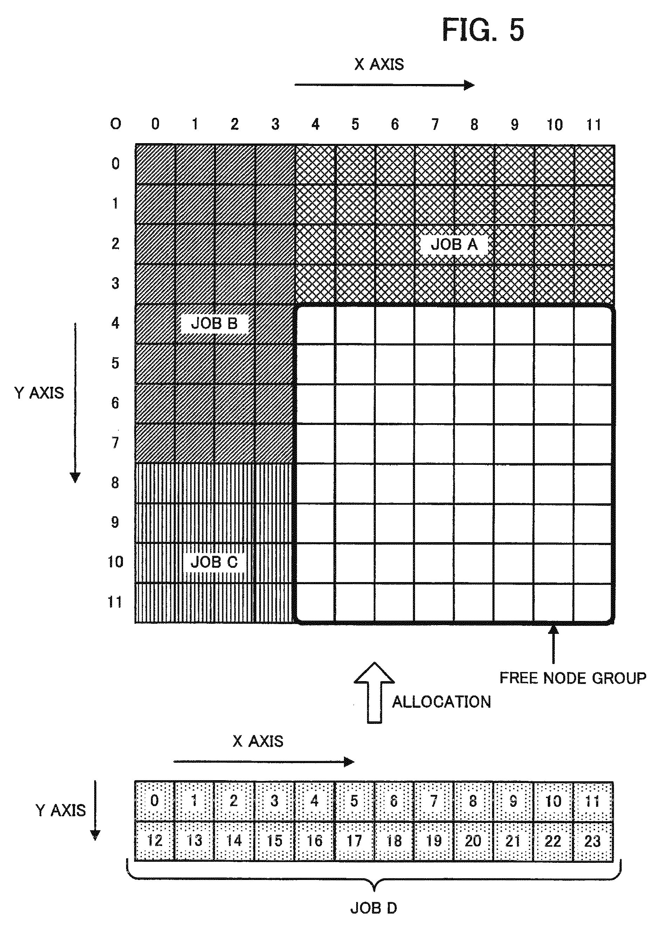

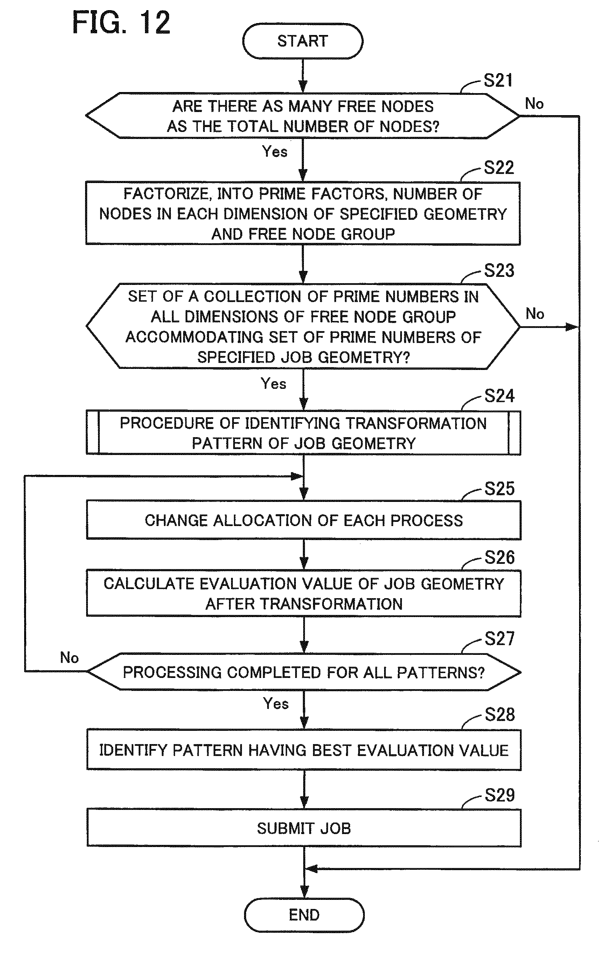

FIG. 5 illustrates a problem with node allocation. The upper part of FIG. 5 illustrates a node group included in the parallel computer 200. One block expresses one node. Here, let the top left corner of FIG. 5 be the origin O. In addition, let the coordinate axis rightward from the origin O be the X-axis (also referred to as the X-dimension). Let the coordinate axis downward from the origin O be the Y-axis (also referred to as the Y-dimension). It is assumed that each node may be identified by 2-dimensional, namely the X-dimension and the Y-dimension, coordinates. In FIG. 5, 12x12 nodes are included in the parallel computer 200. Here, the first term of "12×12" expresses that 12 nodes are successively aligned in the X-axis direction, whereas the second term expresses that 12 nodes are successively aligned in the Y-axis direction.

In FIG. 5, a node group of 8x4 nodes in the range of (4,0) to (11,3) is used for a job A. A node group of 4x8 nodes in the range of (0,0) to (3, 7) is used for a job B. A node group of 4x4 nodes in the range of (0,8) to (3,11) is used for a job C. In the following, a combination of number of nodes in each coordinate axis direction such as "8x4" or "4x8" may be referred to as a "geometry" of a job. On the other hand, the 8x8 nodes in the range of (4,4) to (11,11) belong to a free node group which is not used for any job.

It is assumed that a node which has been allocated to a job will not be allocated to a new job until the job is completed. On the other hand, a part or whole of the free node group may be immediately allocated to a new job. It is assumed that one node will not be simultaneously allocated to a plurality of jobs, and will be used for one job at most. In addition, it is assumed that one job uses a node group including two or more successive (unseparated) nodes. A program specified in the job information is sent into each node (copied to the node), and a process is allocated. Accordingly, two or more processes belonging to one job is performed in parallel using two or more nodes.

The management apparatus 100 receives job information from the client 300. For example, the management apparatus 100 receives job information indicating a job D having specified a geometry of 12x2 nodes as information relating to the number of nodes. The job information specifies numbers of processes allocated to the 24 nodes, respectively. The correspondence relation between a process number and the content of processing is defined, for example, in a program specified in the job information. In other words, it turns out that the content of processing desired to be performed by each of the 12x2 nodes is identified by the process number.

Here, the management apparatus 100 attempts to cause the parallel computer 200 to perform the job D, based on the job information received from the client 300. The management apparatus 100 searches, in the parallel computer 200, a free node group that matches the geometry of 12x2 nodes specified in the job information of the job D. However, it is not allowed to allocate one node simultaneously to a plurality of jobs, and therefore the management apparatus 100 fails in finding a free node group of 12x2 nodes. In such a case, for example, the management apparatus 100 determines that allocation of nodes to the job D is impossible, and may keep the job D waiting until execution of the job B or the job C is completed. As thus described, there is a possibility that execution of the job D requesting 24 nodes is not able to be started due to mismatch of job geometry, although there exist 64 free nodes in the parallel computer 200. There is a problem that the job D being in a wait state may reduce the operating rate of nodes of the parallel computer 200, resulting in a reduced throughput of the parallel computer system. Accordingly, the management apparatus 100 attempts to transform the job geometry specified by the client 300.

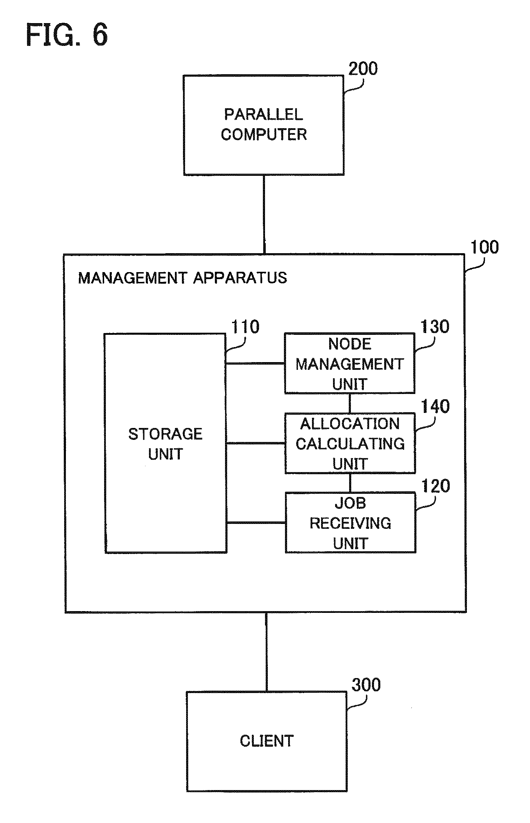

FIG. 6 illustrates an exemplary function of the parallel computer system. The management apparatus 100 has a storage unit 110, a job receiving unit 120, a node management unit 130, and an allocation calculating unit 140. The job receiving unit 120, the node management unit 130, and the allocation calculating unit 140 are communicable with one another. The storage unit 110 is implemented as a storage area secured in the RAM 102 or the HDD 103, for example. The job receiving unit 120, the node management unit 130, and the allocation calculating unit 140 are implemented, for example, as program modules executed by the processor 101.

The storage unit 110 stores information used for processing by the job receiving unit 120, the node management unit 130, and the allocation calculating unit 140. The information stored in the storage unit 110 includes a request table and a communication table. The request table and the communication table include job information acquired from the client 300. As will be described below, the request table includes a geometry of a job, i.e., information expressing the total number of nodes used by a job as a product of the number of nodes of each coordinate axis. In addition, the request table includes information indicating the correspondence relation between a process number and a node, i.e., how a process is allocated to each node in the job geometry. The communication table includes the communication relation between a plurality of processes, i.e., information indicating whether or not data may be transmitted from one process to another.

The job receiving unit 120 receives, from the client 300, job information requesting execution of a job using the parallel computer 200. The job information includes a request table and a communication table. In addition, the job information includes specification of a program to be used for activating a process. Upon receiving the job information, the job receiving unit 120 stores, in the storage unit 110, the request table and the communication table included in the received job information. In addition, the job receiving unit 120 returns a response indicating reception of the job information to the client 300. On this occasion, the job receiving unit 120 may notify the client 300 of whether or not execution of the requested job has been started (one or more nodes have been allocated), or whether the requested job has been put in a wait state (no node has been allocated).

The node management unit 130 monitors the status of the parallel computer 200 and manages submitting of jobs to the parallel computer 200. The node management unit 130 collects information indicating the node configuration from the parallel computer 200. The information indicating the node configuration indicates how many nodes are included in the parallel computer 200, and also how the nodes are connected.

In addition, the node management unit 130 manages whether or not each node included in the parallel computer 200 is in use, in other words, whether or not a process belonging to any job has been allocated. For example, the node management unit 130 may grasp whether or not each node is in use by regularly inquiring each node. When, in addition, execution of the process has been completed or allocation of the process has been released for a certain node, the node management unit 130 may grasp that the status of a node has turned from in-use to not-in-use by receiving a completion notification from the node. Upon receiving an inquiry about a free node group from the allocation calculating unit 140, the node management unit 130 searches a free node group which is a set of successive unused nodes, and sends back the result to the allocation calculating unit 140.

In addition, the node management unit 130 causes the parallel computer 200 to start a job, according to an instruction from the allocation calculating unit 140. For example, the node management unit 130 transmits, from the allocation calculating unit 140, a specified program to a specified node, and transmits an activation command which activates the program to the node. On this occasion, the node management unit 130 may specify, as a parameter, a process number specified by the allocation calculating unit 140. Accordingly, a process with the number specified by the allocation calculating unit 140 is allocated to the specified node.

The allocation calculating unit 140 allocates a free node group of the parallel computer 200 for the job indicated in the job information received by the job receiving unit 120. First, the allocation calculating unit 140 inquires the node management unit 130 about the current free node group. The allocation calculating unit 140 determines whether or not there exist in the parallel computer 200 free nodes that satisfy the total number of nodes requested in the job information, and whether or not there exists a free node group capable of accommodating the job geometry specified in the job information. When the number of nodes in a certain free node group is larger than the number of nodes for the job geometry for all the coordinate axes, the free node group is able to accommodate the specified job geometry.

When there exist a free node group capable of accommodating the specified job geometry, the allocation calculating unit 140 selects free nodes that match the job geometry and allocates them to the job. The allocation calculating unit 140 then notifies the node management unit 130 of the result of node allocation so that the job may be started. When, in addition, there does not exist free nodes that satisfy the requested total number of nodes of the parallel computer 200, the allocation calculating unit 140 stores information relating to the requested job in a queue to keep the job waiting, and waits until other jobs being performed are completed and the number of free nodes increases.

When, in contrast, there exists a free node group that satisfies the condition of the total number of nodes but does not satisfy the condition of the job geometry, the allocation calculating unit 140 changes the specified job geometry without changing the requested total number of nodes, so that the existing free node group may be used. The allocation calculating unit 140 allows a free node group to be allocated to the job by changing the geometry of 12x2 nodes to a geometry of 6x4 nodes, for example.

The parallel computer 200 performs a job requested by the management apparatus 100. Each node of the parallel computer 200 uses a program specified by the node management unit 130, and performs the process specified by the node management unit 130. When execution of the job is completed, the parallel computer 200 may notify the management apparatus 100 of the fact.

The client 300 creates job information by user operation and transmits the job information to the management apparatus 100.

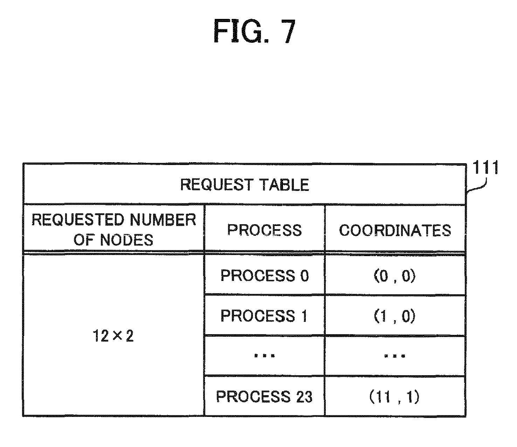

FIG. 7 illustrates an exemplary request table. A request table 111 is included in the job information transmitted by the client 300, and is stored in the storage unit 110. The request table 111 includes columns for requested number of nodes, process, and coordinates. The requested-number-of-nodes column has registered therein the number of nodes requested to be allocated. The requested number of nodes is expressed as the product of the numbers of nodes for each coordinate axis and may be regarded as expressing the job geometry. The process column has registered therein a process number. For example, with n being the number of processes, the process number may be expressed as a serial number from 0 to n-1. Since one process is allocated to one node, the number of processes n is equal to the total number of nodes requested by the job. The coordinates column has registered therein the coordinates of the node to which a process is allocated. The coordinates indicate the relative positional relation in the job geometry specified by the client 300. Generally, one of the nodes in the job geometry is set as the origin, and N-dimensional coordinates are provided to other nodes, with the aforementioned node being the base point.

For example, the request table 111 has registered therein information relating to the job D illustrated at the lower part of FIG. 5. In such a case, the request table 111 has registered therein "12×2" as the request number of nodes. In addition, the request table 111 has registered therein a correspondence relation such as coordinates (0,0) for a process 0, coordinates (1,0) for a process 1, and coordinates (11,1) for a process 23.

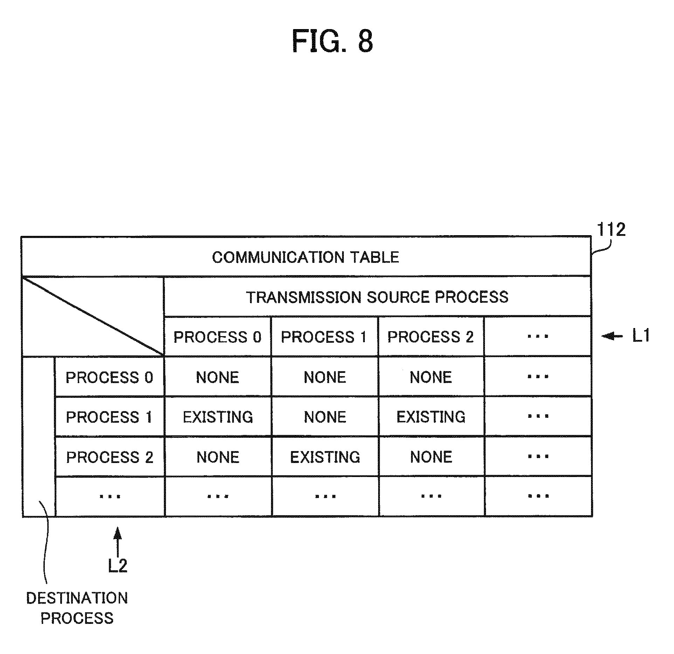

FIG. 8 illustrates an exemplary communication table. A communication table 112 is included in the job information transmitted by the client 300, and is stored in the storage unit 110. A line L1 indicates a process number of a transmission source process. A line L2 indicates a process number of a destination process. Information as to whether or not communication is allowed between two processes may be acquired by referring to the communication table 112. Whether or not communication is allowed between two processes is defined by a program which generates the processes and therefore the user of the client 300 preliminarily knows the information.

In the example of FIG. 8, for example, the process 0 may transmit data to the process 1 without transmitting data to the processes 0 and 2. The process 1 may transmit data to the process 2 without transmitting data to the processes 0 and 1. The process 2 may transmit data to the process 1 without transmitting data to the processes 0 and 2.

In the example of FIG. 8, presence or absence of data transmission between two processes is asymmetric. For example, whereas the process 0 may transmit data to the process 1, the process 1 does not transmit data to the process 0. However, there may be a case where the presence or absence of data transmission between two processes is symmetric. In such a case, description of the communication table 112 may be simplified.

Next, a node allocation procedure will be described, mainly assuming a case where the topology of the parallel computer 200 is a 2-dimensional mesh or a 2-dimensional torus.

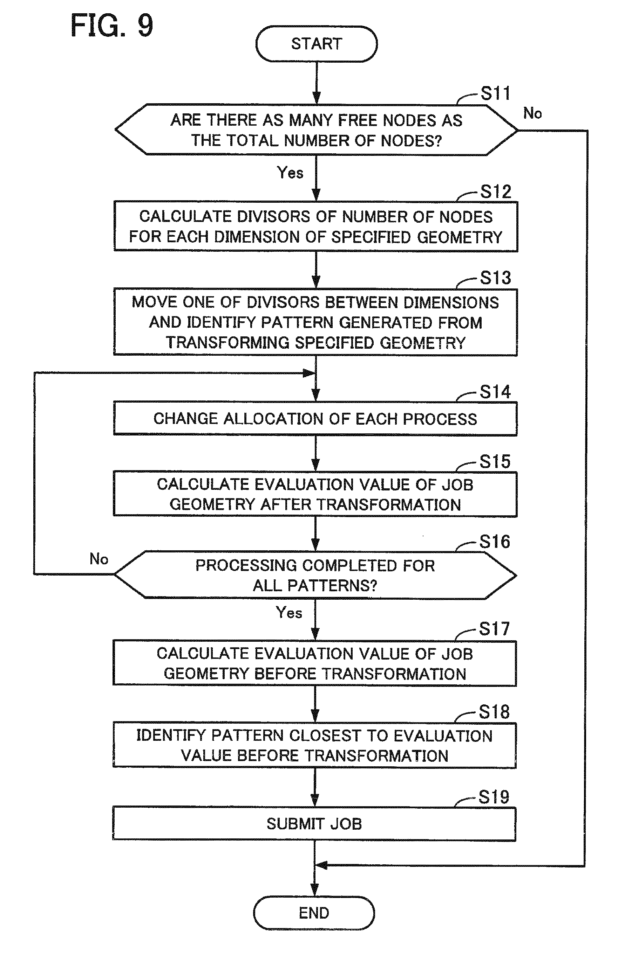

FIG. 9 is a flowchart illustrating an exemplary procedure of allocating 2-dimensional nodes to a job. The procedure of FIG. 9 starts by receiving job information from the client 300 by the job receiving unit 120. In the following, the procedure illustrated in FIG. 9 will be described along with step numbers.

(S11) The allocation calculating unit 140 inquires the node management unit 130 about a currently existing free node group. The node management unit 130 searches a free node group existing in the parallel computer 200, and returns respective geometries and coordinates of one or two or more free node groups.

Referring to the request table 111, the allocation calculating unit 140 determines whether or not there exist in the parallel computer 200 as many free nodes as the total number of nodes requested by the client 300. When, for example, the requested total number of nodes is 24 (=12×2), the allocation calculating unit 140 determines whether or not there exist a free node group including 24 or more nodes. The process flow proceeds to step S12 when there exist as many free nodes as the total number of nodes; otherwise the procedure is terminated.

When the procedure is terminated, the job receiving unit 120 may notify the client 300 that allocation of nodes is impossible. In addition, the allocation calculating unit 140 may store, in a queue on the RAM 102, information indicating the job to which nodes have not been allocated, and keep the job waiting. In such a case, for example, the allocation calculating unit 140 determines whether or not it is possible to allocate nodes to the waiting job when other jobs have been completed and the number of free nodes has increased. When, in addition, there exist a free node group that may accommodate the specified job geometry, the allocation calculating unit 140 allocates the free nodes to the requested job and causes the parallel computer 200 to perform the requested job, without performing subsequent processes.

(S12) The allocation calculating unit 140 calculates all the divisors of the number of nodes for each of the X- and Y-dimensions included in the specified job geometry.

(S13) The allocation calculating unit 140 moves one of the divisors between dimensions, and identifies a pattern generated from transforming the specified job geometry. However, the job geometries after transformation are limited to those which may be accommodated in one or more of the free node groups. The job geometry after transformation may be calculated using expressions (1) and (2).

$$M1_{src} = M_{src}/fact \qquad (1)$$

$$M1_{dst} = M_{dst} \times fact \qquad (2)$$

In expressions (1) and (2), $M1_{src}$ indicates the number of nodes in the src-dimension, the nodes being the move source after transformation. $M_{src}$ indicates the number of nodes in the src-dimension, the nodes being the movement source before transformation. "fact" indicates a divisor to be moved between dimensions. $M1_{dst}$ indicates the number of nodes in the dst-dimension which is a move destination after transformation. $M_{dst}$ indicates the number of nodes in the dst-dimension which is a move destination before transformation. Moving the divisor fact from the src-dimension to the dst-dimension reduces the number of nodes in the src-dimension to 1/fact, whereas the number of nodes in the dst-dimension increases by fact times. However, only moving the divisor does not change the total number of nodes requested by the job.

For example, the allocation calculating unit 140 selects one of the divisors from the X-dimension and the Y-dimension and moves it to the other dimension, and determines whether or not the job geometry acquired by the movement is accommodatable in any of the free node groups. When the job geometry is accommodatable in a free node group, the allocation calculating unit 140 employs the job geometry as a transformation pattern. When, on the other hand, the job geometry is not accommodatable in any free node group, the allocation calculating unit 140 discards the job geometry without employing it as a transformation pattern. The allocation calculating unit 140 identifies all the conceivable transformation patterns.

(S14) The allocation calculating unit 140 selects one of the patterns identified at step S13, and changes the allocation of each process, using expressions (3) and (4).

$$v1_{src} = v_{src}/fact \qquad (3)$$

$$v1_{dst} = (v_{dst} \times fact) + (v_{src}\%fact) \qquad (4)$$

In expressions (3) and (4), $v1_{src}$ indicates the coordinates in the src-dimension, the nodes being the move source after transformation. $v_{src}$ indicates the coordinates inf the src-dimension, the nodes being the move source before transformation. $v_{src}/fact$ indicates the integer part when dividing $v_{src}$ by the divisor fact and truncating after the decimal point. $v1_{dst}$ indicates the coordinates in the dst-dimension which is the move destination after transformation. $v_{dst}$ indicates the coordinates in the dst-dimension which is the move destination before transformation. $v_{src}\%fact$ indicates the remainder of dividing $v_{src}$ by the divisor fact. $v_{src}$, $v_{dst}$, $v1_{src}$ and $v1_{dst}$ are integers equal to or larger than zero, respectively. According to expressions (3) and (4), a process which has been arranged to the coordinates ($v_{src}$, $v_{dst}$) in the job geometry before transformation turns out to be arranged to the coordinates ($v1_{src}$, $v1_{dst}$) in the job geometry after transformation.

(S15) The allocation calculating unit 140 calculates the evaluation value of the job geometry after transformation. Here, as an exemplary evaluation value, the total number of hops (TotalHop) indicating the communication cost between nodes is used. It is indicated that the smaller the total number of hops is, the lower the communication cost between nodes becomes. Referring to the communication table 112, the allocation calculating unit 140 calculates the total number of hops, using expression (5).

$$TotalHop = \sum_{i=0}^{n-1}\sum_{j=0}^{n-1} hop(i,j) \qquad (5)$$

In expression (5), n indicates the number of processes included in a job. The value of a function hop (i, j) indicates the number of hops from a node (node i) having a process i allocated thereto, to a node (node j) having a process j allocated thereto. The number of hops is the number of times data passes across different nodes, which may also be regarded as the path length of communication. The number of hops is one when nodes i and j are adjacent, and the further apart the nodes i and j are separated, the larger the number of hops becomes. For example, the number of hops may be calculated as the sum of the difference between the X coordinate of the node i and X coordinate of the node j and the difference between the Y coordinate of the node i and the Y coordinate of the node j. When data is not transmitted from the process i to the process however, the value of the function hop (i, j) is set to zero. The total number of hops is the summation of the values of the function hop (i, j) for a set of all the processes i and j (a set distinguishing the order too).

(S16) The allocation calculating unit 140 determines whether or not the processing at steps S14 and S15 has been completed for all the patterns identified at step S13. The process flow proceeds to step S17 when the processing has been completed; otherwise the process flow proceeds to step S14.

(S17) Referring to the request table 111 and the communication table 112, the allocation calculating unit 140 calculates the evaluation value of the job geometry before transformation. As an example, the allocation calculating unit 140 calculates the total number of hops for the job geometry before transformation.

(S18) The allocation calculating unit 140 identifies, from the patterns identified at step S13, a pattern whose evaluation value (e.g., total number of hops) calculated at step S15 is closest to the evaluation value (e.g., total number of hops) of the job geometry before transformation calculated at step S17. The allocation calculating unit 140 employs the identified pattern as the job geometry after transformation. The allocation calculating unit 140 may select, from among the patterns identified at step S13 in place of steps S17 and S18, one having the best evaluation value (e.g., the smallest total number of hops) calculated at step S15.

(S19) The allocation calculating unit 140 performs matching of the job geometry after transformation with the free node group, and determines the nodes to be allocated to the job and the process numbers of the processes to be allocated to respective nodes. The allocation calculating unit 140 notifies the node management unit 130 of the coordinates (absolute coordinates in the parallel computer 200) of the nodes to be used and a list of process numbers. The node management unit 130 starts execution of the job using the nodes (allocated nodes) specified by the allocation calculating unit 140. For example, the node management unit 130 copies the file of the program specified in the job information to each of the allocated nodes, and transmits a command of activating the program to each of the allocated nodes. Accordingly, a process that performs the desired processing is activated in each allocated node. The procedure is then terminated.

As thus described, it is possible to realize a similar performance to that before transformation by identifying, from among the transformation patterns of the job geometry, a pattern whose evaluation value is closest to the job geometry before transformation. When the total number of hops is used as the evaluation value, a similar communication performance to that before transformation may be realized.

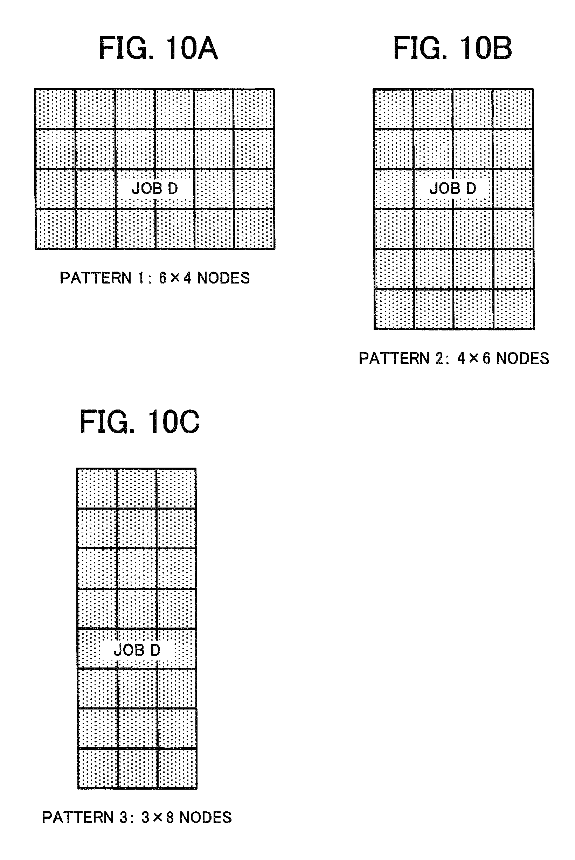

FIGS. 10A to 10C illustrate a specific example of a procedure of allocating 2-dimensional nodes to a job.

The job receiving unit 120 receives, from the client 300, job information of the job D having a geometry of 12x2 nodes. The node management unit 130 recognizes that the number of free nodes of the parallel computer 200 is 64 (8x8). The allocation calculating unit 140 then determines that there exist as many as 24 (12x2) free nodes in the parallel computer 200, corresponding to the total number of nodes requested by the job D. On the other hand, the allocation calculating unit 140 determines that it is impossible to allocate nodes to the job D with the job geometry of 12x2 nodes.

Accordingly, the allocation calculating unit 140 calculates the divisors in the numbers of nodes in the X-and Y-dimensions of the job geometry specified by the job D. The divisors in the X-dimension are 1, 2, 3, 4, 6 and 12. The divisors in the Y-dimension are 1 and 2. The allocation calculating unit 140 then calculates a pattern which is a transformation of the specified job geometry (12x2) by moving one of the divisors between dimensions.

There are conceivable six job geometries, namely $24 \times 1$, $6 \times 4$, $4 \times 6$, $3 \times 8$, $2 \times 12$ and $1 \times 24$, acquired by moving one divisor. However, since the geometry of the free node group existing in the parallel computer 200 is $8 \times 8$, the job geometries $24 \times 1$, $2 \times 12$ and $1 \times 24$ which are not accommodatable in the free node group are excluded from the transformed patterns. Therefore, three transformation patterns $6 \times 4$, $4 \times 6$ and $3 \times 8$ are provided as candidates.

FIG. 10A illustrates the job geometry of 6x4 as the pattern 1. The pattern 1 corresponds to moving the divisor "2" of the X-dimension to the Y-dimension. FIG. 10B illustrates the job geometry of 4x6 as the pattern 2. The pattern 2 corresponds to moving the divisor "3" of the X-dimension to the Y-dimension. FIG. 10C illustrates the job geometry of $3 \times 8$ as the pattern 3. The pattern 3 corresponds to moving the divisor "4" of the X-dimension to the Y-dimension.

Here, the job geometry of $4 \times 6$ is a rotation of the job geometry of $6 \times 4$ from the viewpoint of the number of nodes in each dimension. From the viewpoint of allocating a process, however, the $4 \times 6$ process allocation does not match the rotated $6 \times 4$ process allocation. In other words, there is a possibility that the evaluation value of the job geometry of $4 \times 6$ does not match the evaluation value of the job geometry of $6 \times 4$. Accordingly, the allocation calculating unit 140 evaluates the job geometry of $6 \times 4$ and the job geometry of $4 \times 6$ as separate transformation patterns.

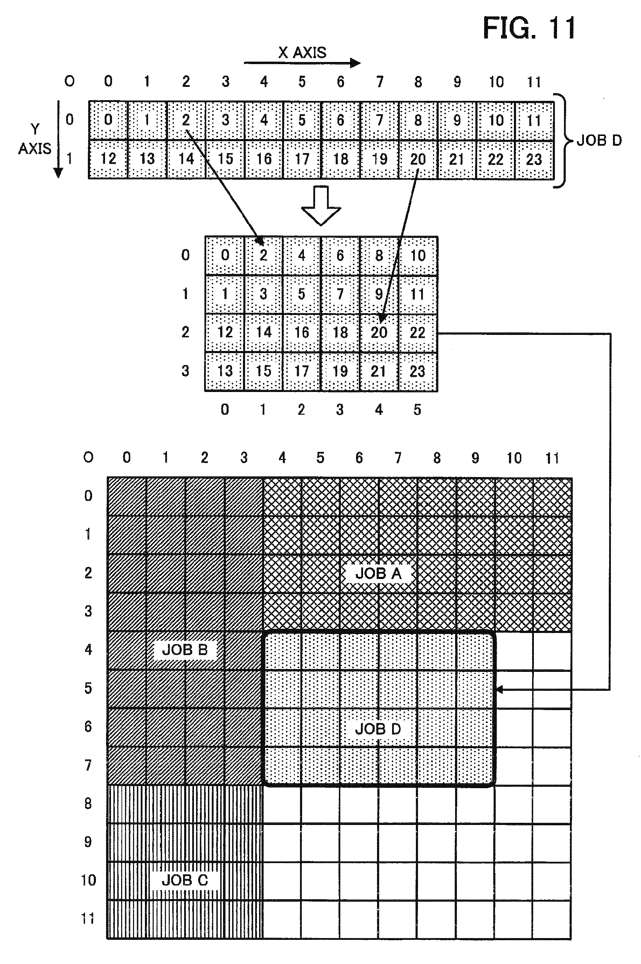

FIG. 11 illustrates a specific example (continued) of the procedure of allocating 2-dimensional nodes to a job. The upper part of FIG. 11 illustrates that, when a specified job geometry of (12x2) is transformed into the job geometry of (6x4) of the pattern 1, allocation of the process is changed along with the transformation. Allocation of the process after the change may be calculated by the allocation calculating unit 140 using expressions (3) and (4).

As for the process 2 arranged at the coordinates (2,0), for example, the X coordinate in the pattern 1 is $v1_X=2/2=1$, and the Y coordinate after transformation is $v1_Y=0 \times 2+2\%2=0$. Therefore, the process 2 turns out to be moved to the coordinates (1,0) in the pattern 1. In addition, as for the process 20 arranged at the coordinates (8,1), the X coordinate in the pattern 1 is $v1_X=8/2=4$, and the Y coordinate after transformation is $v1_Y=1 \times 2+8\%2=2$. Therefore, the process 20 turns out to be moved to the coordinates (4,2) in the pattern 1.

Referring to the communication table 112 and using expression (5), the allocation calculating unit 140 calculates the total number of hops as the evaluation value of the job geometry of (6x4) of the pattern 1. Similarly, the allocation calculating unit 140 calculates the allocation of the process for the job geometry of (4x6) of the pattern 2, the job geometry of (3x8) of the pattern 3, and calculates the total number of hops. Here, it is assumed that the total number of hops of the pattern 1 is 120, the total number of hops of the pattern 2 is 130, and the total number of hops of the pattern 3 is 180.

In addition, the allocation calculating unit 140 calculates the total number of hops of the job geometry of (12x2) specified by the client 300, referring to the communication table 112. Here, the result of calculation is assumed to be 100.

The allocation calculating unit 140 then selects the pattern 1 whose total number of hops is closest to the total number of hops of the job geometry before transformation (100). The lower part of FIG. 11 illustrates a state in which the node management unit 130 has allocated free nodes of the parallel computer 200 to the job D which has been transformed into the 6x4 job geometry. Here, 6x4 nodes in the range of (4,4) to (9,7) have been allocated to the job D.

As thus described, free nodes of the parallel computer 200 may be allocated to the job D by permitting transformation of the specified job geometry without changing the requested total number of nodes. Allocating the job D may thus raise the node operating rate in the parallel computer 200.

The aforementioned job geometry transformation method may also be applied to a case where the interconnection network connecting the nodes of the parallel computer 200 is 3- or higher dimension. For example, the allocation calculating unit 140 selects two coordinate axes from three or more coordinate axes, and calculates a transformation pattern by moving one of the divisors between the two selected coordinate axes. The allocation calculating unit 140 may calculate various transformation patterns by changing the combination of two coordinate axes to be selected. However, there is conceivable a job geometry transformation method other than that described above. In the following, an example of another transformation method will be described assuming application to a 3- or higher dimensional interconnection network.

FIG. 12 is a flowchart illustrating an exemplary procedure of allocating 3- or higher dimensional nodes to a job. The procedure of FIG. 12 starts by receiving job information from the client 300 by the job receiving unit 120. The requested-number-of-nodes column of the request table 111 included in the job information has registered therein information indicating a 3- or higher dimensional job geometry. For example, the requested-number-of-nodes column of the request table 111 has registered therein 8x12x15. The numerals indicate that the number of nodes in the X-dimension is 8, the number of nodes in the Y-dimension is 12, and the number of nodes in the Z-dimension is 15. In the following, the procedure illustrated in FIG. 12 will be described along with step numbers.

(S21) The allocation calculating unit 140 inquires the node management unit 130 about a currently existing free node group, and determines whether or not there exist, in the parallel computer 200, as many free nodes as the total number of nodes requested by the client. The process flow proceeds to step S22 when there exist a sufficient number of free nodes; otherwise the procedure is terminated.

When, in addition, there exist a free node group that may accommodate the specified job geometry, the allocation calculating unit 140 allocates free nodes to the requested job and causes the parallel computer 200 to perform the requested job, without performing subsequent processes.

(S22) The allocation calculating unit 140 factorizes, into prime factors, the number of nodes in each dimension (X-, Y-, Z-dimension, etc.) included in the specified job geometry. In addition, the allocation calculating unit 140 factorizes, into prime factors, the number of nodes in each dimension included in the job geometry of the free node group, for each free node group existing in the parallel computer 200.

(S23) The allocation calculating unit 140 determines, for each free node group, whether or not a set of a collection of prime numbers in all the dimensions of the free node group accommodates a set of prime numbers of the specified job geometry, and determines whether or not there exist at least one free node group that satisfies the condition. On this occasion, difference of dimensions in which the prime numbers exist may be ignored.

For example, let us assume that the specified job geometry is 8x12x15, and the geometry of a certain free node group is 6x15x16. Factorizing the former into prime factors results in $(2 \times 2 \times 2) \times (2 \times 2 \times 3) \times (3 \times 5) = 2^5 \times 3^2 \times 5$, whereas factorizing the latter into prime factors results in $(2 \times 3) \times (3 \times 5) \times (2 \times 2 \times 2 \times 2) = 2^5 \times 3^2 \times 5$. Therefore, the free node group accommodates the set of prime numbers of the specified job geometry, with the difference of dimensions being ignored.

The process flow proceeds to step S24 when there exist at least one free node group that satisfies the condition; otherwise the procedure is terminated. When terminating the procedure, the job receiving unit 120 may notify the client 300 that allocation of nodes is impossible.

(S24) The allocation calculating unit 140 identifies a pattern for transforming the specified job geometry. The transformation pattern in the procedure of FIG. 12 is for defining a plurality of operations that move one or two or more prime numbers from a certain dimension to another dimension as will be described below, and perform the plurality of operations in a certain order. The job geometry after the final transformation is limited to that which may be accommodated to one of the free node groups. Details of a pattern identification procedure will be described below.

(S25) The allocation calculating unit 140 selects one of the patterns identified at step 524, and changes the allocation of each process according to the selected pattern. For example, the allocation calculating unit 140 applies expressions (3) and (4) described above to calculate the coordinates ($v1_{src}$, $v1_{dst}$) of each process for each operation of moving one or two or more prime numbers from the src-dimension to the dst-dimension. On this occasion, it suffices to define the divisor fact of expressions (3) and (4) to be a product of the one or two or more moved prime numbers. The allocation calculating unit 140 sequentially performs the change of process allocation, according to the order of operations indicated by the pattern. Accordingly, the process allocation in the final job geometry may be calculated.

(S26) The allocation calculating unit 140 calculates the evaluation value of the job geometry after transformation. As an example, the allocation calculating unit 140 calculates the total number of hops (TotalHop), referring to the communication table 112 and using expression (5). As has been described above, the total number of hops indicates the communication cost between nodes in a manner such that the smaller the total number of hops is, the smaller the communication cost becomes.

(S27) The allocation calculating unit 140 determines whether or not the processing at steps S25 and S26 has been completed for all the patterns identified at step S24. The process flow proceeds to step S28 when the processing has been completed; otherwise the process flow proceeds to step S25.

(S28) The allocation calculating unit 140 identifies, from the patterns identified at step S24, a pattern having the best evaluation value (e.g., a pattern having the smallest total number of hops) calculated at step S26. The allocation calculating unit 140 employs the identified pattern as the job geometry after transformation. The allocation calculating unit 140 may also calculate the evaluation value of the job geometry before transformation in place of step S28, and employ, from the patterns identified at step S24, a pattern whose evaluation value is closest to the job geometry before transformation.

(S29) The allocation calculating unit 140 performs matching of the job geometry after transformation with the free node group, and determines the nodes to be allocated to the job and the process number of the process to be allocated to each node. The node management unit 130 starts execution of the job using the nodes specified (allocated nodes) by the allocation calculating unit 140. For example, the node management unit 130 copies the file of the program specified in the job information to each of the allocated nodes, and transmits a command of activating the program to each of the allocated nodes. The procedure is then terminated.

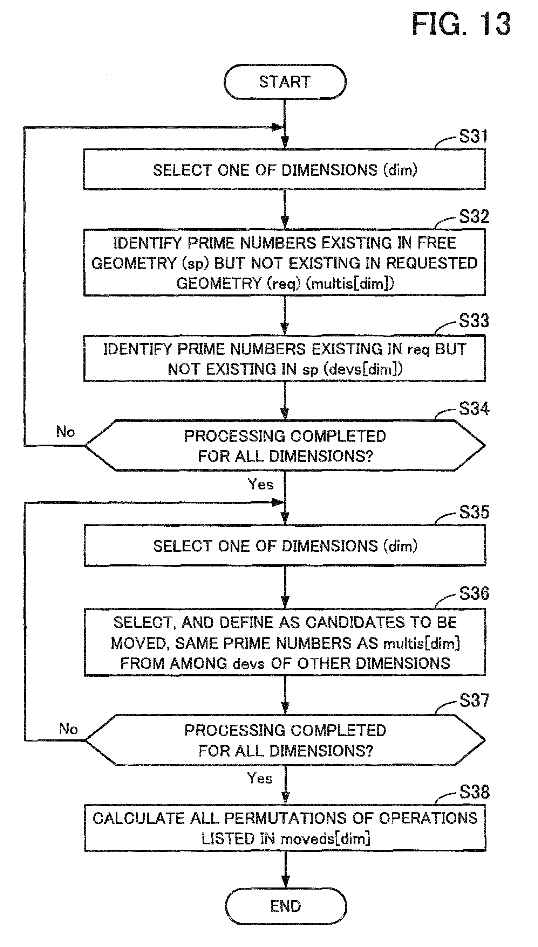

FIG. 13 is a flowchart illustrating an exemplary procedure of identifying the transformation pattern of the job geometry. The procedure illustrated in FIG. 13 corresponds to the procedure of step S24 described above. In the following, the procedure illustrated in FIG. 13 will be described along with step numbers. In the following description, exemplary variable names and function names used in the program implementing the procedure may be bracketed. In addition, a procedure for one free node group will be described here. When there exist two or more free node groups satisfying the condition at step S23, the procedure illustrated in FIG. 13 is performed for each of the free node groups, whereby one or two or more patterns are identified.

(S31) The allocation calculating unit 140 selects one of the dimensions (dimension dim). For example, when the interconnection network of the parallel computer 200 is 3-dimensional, one of the X-dimension, Y-dimension and Z-dimension is selected.

(S32) The allocation calculating unit 140 identifies, for the dimension dim, prime numbers which exist in the geometry (free geometry sp) of the free node group but do not exist in the job geometry (requested geometry req) specified by the client 300 (prime number set multis[dim]).

(S33) The allocation calculating unit 140 identifies prime numbers which exist in the requested geometry req but do not exist in the free geometry sp (prime number set devs [dim]).

(S34) The allocation calculating unit 140 determines whether or not the processing at steps S32 and S33 has been completed for all the dimensions. For a 3-dimensional interconnection network, for example, the allocation calculating unit 140 determines whether or not all of the X-dimension, Y-dimension and Z-dimension have been selected at step S31. The process flow proceeds to step S35 when the processing has been completed; otherwise the process flow proceeds to step S31.

(S35) The allocation calculating unit 140 selects one of the dimensions (dimension dim).

(S36) The allocation calculating unit 140 selects the same prime numbers as the prime number set multis[dim] from the prime number set devs of dimensions other than the dimension dim, and defines them as candidates to be moved to the dimension dim (operation sets moveds[dim]). For example, when the dimension dim is the X-dimension in a 3-dimensional interconnection network, the other dimensions are the Y-dimension and the Z-dimension. When two or more prime numbers are included in the prime number set multis[dim], all the two or more prime numbers will be moved. On this occasion, two or more prime numbers may exist in the prime number set devs of another dimension, or may exist in the prime number set devs of a plurality of other dimensions in a distributed manner. In the latter case, the moving of prime numbers from a first another dimension to the dimension dim and the moving of prime numbers from a second another dimension to the dimension dim are treated as separate operations.

(S37) The allocation calculating unit 140 determines whether or not the processing at step S36 has been completed for all the dimensions. The process flow proceeds to step S38 when the processing has been completed; otherwise the process flow proceeds to step S35.

(S38) The allocation calculating unit 140 combines the operation sets moveds of all the dimensions, and calculates all the permutations of the operations listed in the combined operation sets. Permutations of the moving operation of prime numbers turn out to be the transformation patterns. The procedure is then terminated.

Different orders of moving the prime numbers may result in difference of evaluation values, because allocations of processes differ despite that the final job geometries are the same. In the procedures of FIG. 12 and 13, therefore, transformations of different process allocations having the same job geometries are also identified as different "patterns", from which the best pattern is selected. A plurality of patterns to be evaluated may include patterns having different orders of moving prime numbers (patterns having the same job geometry after transformation but different process allocations), which have been calculated for the same free node group. In addition, a plurality of patterns to be evaluated may include patterns calculated for free node groups of different geometries (patterns having different job geometries after transformation).

As thus described, procedures of FIGS. 12 and 13, allow free nodes of the parallel computer 200 having a 3- or higher dimensional interconnection network to be flexibly allocated to a job.

Next, a specific example of a procedure of allocating nodes of a 3-dimensional interconnection network to a job will be described. As an example, the job receiving unit 120 receives, from the client 300, job information specifying an 8×12×15 job geometry. On this occasion, it is assumed that there exist a group of 6×15×16 free nodes in the parallel computer 200. The allocation calculating unit 140 determines that there exist, in the parallel computer 200, as many free nodes as the requested total number of nodes which is 8×12×15=1440. On the other hand, the allocation calculating unit 140 determines that allocation of nodes to the job is impossible for the specified job geometry 8×12×15.

The allocation calculating unit 140 then factorizes, into prime factors, the number of nodes of respective dimensions of the specified job geometry (8×12×15) and the geometry (6×15×16) of the free node group. The X-dimension of the specified job geometry is $2\times2\times2$, the Y-dimension is $2\times2\times3$ and the Z-dimension is $3\times5$. The X-dimension of the geometry of the free node group is $2\times3$, the Y-dimension is $3\times5$, and the Z-dimension is $2\times2\times2\times2$. Next, the allocation calculating unit 140 calculates the prime number set multis and the prime number set devs for the X-, Y- and Z-dimensions. It turns out that multis $[X]$ = {3}, multis[Y]={5}, and multis $[Z]$={$2\times2\times2\times2$}. In addition, it turns out that devs[X]={2,2}, devs[Y]={2,2}, and devs $[Z]$={3,5}.

Next, the allocation calculating unit 140 calculates the operation set moveds for the X-, Y- and Z-dimensions. It turns out that moveds $[X]$ ={3 of devs [Z]}. This indicates an operation of moving "3" from the Z-dimension to the X-dimension. In addition, it turns out that moveds $[Y]$ = {5 of devs [Z]). This indicates an operation of moving "5" from the Z-dimension to the Y-dimension. It turns out that moveds[Z]={$2\times2$ of devs [X], 2x2 of devs [Y]). This indicates an operation of moving "2" and "2" (i.e., "4") from the X-dimension to the Z-dimension, and an operation of moving "2" and "2" (i.e., "4") from the Y-dimension to the Z-dimension.

Accordingly, four operations listed in moveds[X], moveds[Y] and moveds[Z] may be acquired. An operation 1 corresponds to moving "3" from the Z-dimension to the X-dimension. An operation 2 corresponds to moving "5" from the Z-dimension to the Y-dimension. An operation 3 corresponds to moving "4" from the X-dimension to the Z-dimension. An operation 4 corresponds to moving "4" from the Y-dimension to the Z-dimension. The allocation calculating unit 140 calculates all the permutations for the aforementioned four operations. The permutations of the four operations turn out to be the following 24 ways. In other words, 24 "patterns" are calculated.

{1,2,3,4}, {1,2,4,3}, {1,3,2,4}, {1,3,4,2}, {1,4,2,3}, {1,4,3,2}, {2,1,3,4}, {2,1,4,3}, {2,3,1,4}, {2,3,4,1}, {2,4,1,3}, {2,4,3,1}, {3,1,2,4}, {3,1,4,2}, {3,2,1,4}, {3,2,4,1}, {3,4,1,2}, {3,4,2,1}, {4,1,2,3}, {4,1,3,2}, {4,2,1,3}, {4,2,3,1}, {4,3,1,2}, {4,3,2,1} (the numbers listed indicate the operation numbers, and the order of numbers indicate the order of operations).

For each of the patterns described above, job geometries and process allocations are calculated in the order of operations. In the following, an example of the pattern {1,2,3,4} will be described. In addition, the move destination of a process located at the coordinates (5,3,8) at the start time will be traced, as an example.

The allocation calculating unit 140 performs the operation 1 of moving "3" from the Z-dimension to the X-dimension for the specified job geometry ($8\times12\times15$). The job geometry after operation 1 has been performed turns out to be ($8\times3)\times12\times(15/3)=24\times12\times5$, according to expressions (1) and (2). On this occasion, a process located at coordinates (5,3,8) corresponds to moving to ($5\times3+8\%3,3,8/3)=(17,3,2)$, according to expressions (3) and (4).

Next, the allocation calculating unit 140 performs the operation 2 of moving "5" from the Z-dimension to the Y-dimension for the job geometry $24\times12\times5$. The job geometry after the operation 2 has been performed turns out to be $24\times(12\times5)\times(5/5)=24\times60\times1$. On this occasion, the process located at the coordinates (17,3,2) immediately after the operation 1 turns out to be moved to ($17,3\times5+2\%5,2/5)=(17,17,0)$.

Next, the allocation calculating unit 140 performs the operation 3 of moving "4" from the X-dimension to the Z-dimension for the job geometry $24\times60\times1$. The job geometry after the operation 3 has been performed turns out to be ($24/4)\times60\times(1\times4)=6\times60\times4$. On this occasion, the process located at the coordinates (17,17,0) immediately after the operation 2 turns out to be moved to ($17/4,17,0\times4+17\%4)=(4,17,1)$.

Next, the allocation calculating unit 140 performs the operation 4 of moving "4" from the Y-dimension to the Z-dimension for the job geometry 6x60x4. The job geometry after the operation 4 has been performed turns out to be $6\times(60/4)\times(4\times4)=6\times15\times16$. On this occasion, the process located at the coordinates (4,17,1) immediately after the operation 3 turns out to be moved to ($4,17/4,1\times4+17\%4)=(4,4,5)$. As thus described, the specified job geometry 8x12x15 is transformed to the job geometry 6x15x16 so as to be accommodatable in a free node group. Accordingly, the process located at the coordinates (5,3,8) is moved to the coordinates (4,4,5).

The allocation calculating unit 140 calculates, for other processes as well as those described above, the coordinates of the nodes to which the other processes are finally allocated. When the order of moving the prime numbers is different, process arrangements may differ although the final job geometry is the same. Therefore, the allocation calculating unit 140 calculates the process allocations for the 24 patterns described above. The allocation calculating unit 140 then calculates the evaluation value such as the total number of hops for the 24 patterns. When there exist other free node groups, one or two or more patterns are also identified for the other free node groups, and the evaluation value of each pattern is calculated. The allocation calculating unit 140 employs, from all the patterns including the 24 patterns described above, a pattern having the best evaluation value (e.g., a pattern having the smallest total number of hops). Accordingly, the job geometry after transformation and the process allocation are determined.

According to the parallel computer system of the second embodiment, when there does not exist, in the parallel computer 200, any free node group capable of accommodating the job geometry specified by the client 300, the job geometry is transformed according to the geometry of the free node group, and nodes are allocated to the job. Accordingly, it is possible to prevent a job from being kept in a wait state although there exist, in the parallel computer 200, as many free nodes as the total number of nodes requested by the job, and whereby the operating rate of nodes of the parallel computer system rises. In addition, computing resources of nodes may be effectively utilized, and whereby the throughput of the parallel computer system increases. In addition, the wait time before execution of a job starts may be reduced, and whereby the response time from the request to the termination of the job may be shortened for the client 300 who has requested execution of the job.

When, in addition, a plurality of transformation patterns is conceivable, the evaluation value is calculated for each of the patterns, and a pattern whose evaluation value is close to that before transformation or a pattern having the best evaluation value is selected. Accordingly, it is possible to reduce the fall of the processing performance due to transformation of the job geometry. Particularly, using the total number of hops indicating the communication cost between processes as the evaluation value reduces the fall of the communication performance, when communication between processes may become a bottleneck. Therefore, throughput or response time is expected to improve by transforming the job geometry and starting the job earlier, rather than waiting for other jobs to be completed and starting a job without transforming the job geometry.

The information processing by the first embodiment may be realized by causing a processor used for the management apparatus 2 to execute programs. The information processing by the second embodiment may be realized by causing the processor 101 to execute programs. The programs may be stored on a computer-readable storage medium.

For example, programs may be marketed by distributing storage media having stored the programs thereon. In addition, the functions corresponding to the job receiving unit 120, the node management unit 130, and the allocation calculating unit 140 may be realized as separate programs, and each program may be distributed separately. The functions of the job receiving unit 120, the node management unit 130, and the allocation calculating unit 140 may be realized on separate computers. Such a computer may store (install), in a storage device such as Disk stored in the RAM 102 and the HDD 103, a program stored on a storage medium, for example, and read the program from the storage device for execution.

In one aspect, the operating rate of nodes of a parallel computer system improves.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

1. A parallel computer system comprising:

   a plurality of nodes (1a to 1x) which is provided with N-dimensional coordinates identified by N (N is an integer of 2 or more) coordinate axes (X,Y) and a connection relation of which is managed using the N-dimensional coordinates; and
   a management apparatus (2) configured to detect an available free node group (1m to 1x) from among the plurality of nodes (1a to 1x), upon acquiring a processing request (3) having specified therein a number of nodes for each coordinate axis (X,Y) for a node group to be used for processing, convert a number of nodes of two or more coordinate axes out of a number of nodes of the N coordinate axes (X,Y) specified in the processing request (3), according to a number of nodes aligned in each coordinate axis (X,Y) direction of the free node group (1m to 1x), and allocate nodes included in the free node group (1m to 1x) to the processing request (3), according to the converted number of nodes for each coordinate axis (X,Y).

2. The parallel computer system according to claim 1, wherein the management apparatus (2) reduces a number of nodes specified for a first coordinate axis (X) of the N coordinate axes (X,Y), and increases a number of nodes specified for a second coordinate axis (Y) of the N coordinate axes (X,Y), so that the total number of nodes requested in the processing request (3) does not change.

3. The parallel computer system according to claim 2, wherein the management apparatus (2) factorizes the number of nodes specified for the first coordinate axis (X), and moves one of factors acquired by the factorization from the first coordinate axis (X) to the second coordinate axis (Y).

4. The parallel computer system according to one of claims 1 to 3,
   wherein the processing request (3) includes information indicating a communication status between a plurality of processes performed in parallel, and
   wherein, when there exists a plurality of candidate conversion methods as a method of converting the number of nodes of two or more coordinate axes, the management apparatus (2) calculates an index value indicating a cost of communication that occurs between nodes when nodes are allocated to the plurality of processes for each of the plurality of candidate conversion methods, and selects a conversion method based on the index value on the basis of the information indicating the communication status.

5. A control method performed by a parallel computer system including a plurality of nodes (1a to 1x) which is provided with N-dimensional coordinates identified by N (N is an integer of 2 or more) coordinate axes (X,Y) and a connection relation of which is managed using the N-dimensional coordinates, the method comprising:

acquiring a processing request (3) having specified therein a number of nodes for each coordinate axis (X,Y) for a node group to be used for processing;

detecting an available free node group (1m to 1x) from among the plurality of nodes (1a to 1x);

converting a number of nodes of two or more coordinate axes out of the number of nodes of the N coordinate axes (X,Y) specified in the processing request (3), according to a number of nodes aligned in each coordinate axis (X,Y) direction of the free node group (1m to 1x); and

allocating nodes included in the free node group (1m to 1x) to the processing request (3), according to the converted number of nodes for each coordinate axis (X,Y).

6. A computer program that causes a computer to perform a procedure for controlling a parallel computer system including a plurality of nodes (1a to 1x) which is provided with N-dimensional coordinates identified by N (N is an integer of 2 or more) coordinate axes (X,Y) and a connection relation of which is managed using the N-dimensional coordinates, the procedure comprising:

acquiring a processing request (3) having specified therein a number of nodes for each coordinate axis (X,Y) for a node group to be used for processing;

detecting an available free node group (1m to 1x) from among the plurality of nodes (1a to 1x);

converting a number of nodes of two or more coordinate axes out of the number of nodes of the N coordinate axes (X,Y) specified in the processing request (3), according to a number of nodes aligned in each coordinate axis (X,Y) direction of the free node group (1m to 1x); and

allocating nodes included in the free node group (1m to 1x) to the processing request (3), according to the converted number of nodes for each coordinate axis (X,Y).

# FIG. 1

COORDINATE AXIS X

|  | 0 | 1 | 2 | 3 |
|---|---|---|---|---|
| 0 | 1a | 1g | 1m | 1s |
| 1 | 1b | 1h | 1n | 1t |
| 2 | 1c | 1i | 1o | 1u |
| 3 | 1d | 1j | 1p | 1v |
| 4 | 1e | 1k | 1q | 1w |
| 5 | 1f | 1l | 1r | 1x |

COORDI-
NATE AXIS
Y

SUBMIT JOB

MANAGEMENT APPARATUS

2

PROCESSING REQUEST    3

GEOMETRY
INFORMATION : 4 × 3    3a    GEOMETRY    3b
INFORMATION : 2 × 6

CONVERSION

FIG. 2

# FIG. 3

MANAGEMENT APPARATUS — 100

PROCESSOR — 101

RAM — 102

HDD — 103

IMAGE SIGNAL PROCESSING UNIT — 104

INPUT SIGNAL PROCESSING UNIT — 105

READING DEVICE — 106

COMMUNICA- TION INTERFACE — 107

107a

DISPLAY — 11

INPUT DEVICE — 12

STORAGE MEDIUM — 13

200a

...

300

# FIG. 4

# FIG. 5

X AXIS

O  0  1  2  3  4  5  6  7  8  9  10  11

Y AXIS

JOB A

JOB B

JOB C

FREE NODE GROUP

ALLOCATION

X AXIS

Y AXIS

| 0 | 1 | 2 | 3 | 4 | 5 | 6 | 7 | 8 | 9 | 10 | 11 |
| 12 | 13 | 14 | 15 | 16 | 17 | 18 | 19 | 20 | 21 | 22 | 23 |

JOB D

# FIG. 6

PARALLEL
COMPUTER
200

MANAGEMENT APPARATUS
100

STORAGE
UNIT
110

NODE
MANAGEMENT
UNIT
130

ALLOCATION
CALCULATING
UNIT
140

JOB
RECEIVING
UNIT
120

CLIENT
300

# FIG. 7

| REQUEST TABLE 111 | | |
|---|---|---|
| REQUESTED NUMBER OF NODES | PROCESS | COORDINATES |
| 12 × 2 | PROCESS 0 | (0 , 0) |
| | PROCESS 1 | (1 , 0) |
| | . . . | . . . |
| | PROCESS 23 | (11 , 1) |

# FIG. 8

| COMMUNICATION TABLE | | | | | |
|---|---|---|---|---|---|
| | | TRANSMISSION SOURCE PROCESS | | | |
| | | PROCESS 0 | PROCESS 1 | PROCESS 2 | · · · |
| | PROCESS 0 | NONE | NONE | NONE | · · · |
| | PROCESS 1 | EXISTING | NONE | EXISTING | · · · |
| | PROCESS 2 | NONE | EXISTING | NONE | · · · |
| | · · · | · · · | · · · | · · · | · · · |

112

← L1

↑
L2

DESTINATION
PROCESS

# FIG. 9

```
                        ┌─────────────┐
                        │    START    │
                        └─────────────┘
                               │
                               ▼                        ┌─ S11
        ┌──────────────────────────────────────────────┐      No
        < ARE THERE AS MANY FREE NODES AS               >──────────┐
        <  THE TOTAL NUMBER OF NODES?                   >          │
        └──────────────────────────────────────────────┘          │
                            │ Yes                                  │
                            ▼                        ┌─ S12        │
        ┌──────────────────────────────────────────────┐          │
        │ CALCULATE DIVISORS OF NUMBER OF NODES         │          │
        │ FOR EACH DIMENSION OF SPECIFIED GEOMETRY      │          │
        └──────────────────────────────────────────────┘          │
                            │                         ┌─ S13       │
                            ▼                                      │
        ┌──────────────────────────────────────────────┐          │
        │ MOVE ONE OF DIVISORS BETWEEN DIMENSIONS       │          │
        │ AND IDENTIFY PATTERN GENERATED FROM           │          │
        │ TRANSFORMING SPECIFIED GEOMETRY               │          │
        └──────────────────────────────────────────────┘          │
               ┌────────────────────►│                            │
               │                      ▼                ┌─ S14      │
               │    ┌──────────────────────────────────────────┐  │
               │    │ CHANGE ALLOCATION OF EACH PROCESS         │  │
               │    └──────────────────────────────────────────┘  │
               │                      │                ┌─ S15      │
               │                      ▼                            │
               │    ┌──────────────────────────────────────────┐  │
               │    │ CALCULATE EVALUATION VALUE OF JOB         │  │
               │    │ GEOMETRY AFTER TRANSFORMATION             │  │
               │    └──────────────────────────────────────────┘  │
               │                      │                ┌─ S16      │
               │     No               ▼                            │
               │    < PROCESSING COMPLETED FOR         >           │
               └────<  ALL PATTERNS?                   >           │
                    └──────────────────────────────────┘          │
                            │ Yes                                  │
                            ▼                         ┌─ S17       │
        ┌──────────────────────────────────────────────┐          │
        │ CALCULATE EVALUATION VALUE OF JOB             │          │
        │ GEOMETRY BEFORE TRANSFORMATION                │          │
        └──────────────────────────────────────────────┘          │
                            │                         ┌─ S18       │
                            ▼                                      │
        ┌──────────────────────────────────────────────┐          │
        │ IDENTIFY PATTERN CLOSEST TO EVALUATION        │          │
        │ VALUE BEFORE TRANSFORMATION                   │          │
        └──────────────────────────────────────────────┘          │
                            │                         ┌─ S19       │
                            ▼                                      │
        ┌──────────────────────────────────────────────┐          │
        │ SUBMIT JOB                                    │          │
        └──────────────────────────────────────────────┘          │
                            │                                      │
                            ▼◄─────────────────────────────────────┘
                     ┌─────────────┐
                     │     END     │
                     └─────────────┘
```

# FIG. 10A

PATTERN 1 : 6 × 4 NODES

# FIG. 10B

PATTERN 2 : 4 × 6 NODES

# FIG. 10C

PATTERN 3 : 3 × 8 NODES

FIG. 11

# FIG. 12

START

**S21**

ARE THERE AS MANY FREE NODES
AS THE TOTAL NUMBER OF NODES? — No

Yes

**S22**

FACTORIZE, INTO PRIME FACTORS, NUMBER OF
NODES IN EACH DIMENSION OF SPECIFIED GEOMETRY
AND FREE NODE GROUP

**S23**

SET OF A COLLECTION OF PRIME NUMBERS IN
ALL DIMENSIONS OF FREE NODE GROUP
ACCOMMODATING SET OF PRIME NUMBERS OF
SPECIFIED JOB GEOMETRY? — No

Yes

**S24**

PROCEDURE OF IDENTIFYING TRANSFORMATION
PATTERN OF JOB GEOMETRY

**S25**

CHANGE ALLOCATION OF EACH PROCESS

**S26**

CALCULATE EVALUATION VALUE OF JOB GEOMETRY
AFTER TRANSFORMATION

**S27**

No — PROCESSING COMPLETED FOR ALL PATTERNS?

Yes

**S28**

IDENTIFY PATTERN HAVING BEST EVALUATION VALUE

**S29**

SUBMIT JOB

END

# FIG. 13

```
        START
          │
          ▼
┌─────────────────────────────────┐  S31
│  SELECT ONE OF DIMENSIONS (dim)  │
└─────────────────────────────────┘
          │
          ▼
┌─────────────────────────────────┐  S32
│ IDENTIFY PRIME NUMBERS EXISTING  │
│ IN FREE GEOMETRY (sp) BUT NOT    │
│ EXISTING IN REQUESTED GEOMETRY   │
│ (req) (multis[dim])              │
└─────────────────────────────────┘
          │
          ▼
┌─────────────────────────────────┐  S33
│ IDENTIFY PRIME NUMBERS EXISTING  │
│ IN req BUT NOT EXISTING IN sp    │
│ (devs[dim])                      │
└─────────────────────────────────┘
          │
          ▼
   S34  ╱PROCESSING COMPLETED╲  No
  ◄─────╲FOR ALL DIMENSIONS? ╱
          │ Yes
          ▼
┌─────────────────────────────────┐  S35
│  SELECT ONE OF DIMENSIONS (dim)  │
└─────────────────────────────────┘
          │
          ▼
┌─────────────────────────────────┐  S36
│ SELECT, AND DEFINE AS CANDIDATES │
│ TO BE MOVED, SAME PRIME NUMBERS  │
│ AS multis[dim] FROM AMONG devs   │
│ OF OTHER DIMENSIONS              │
└─────────────────────────────────┘
          │
          ▼
   S37  ╱PROCESSING COMPLETED╲  No
  ◄─────╲FOR ALL DIMENSIONS? ╱
          │ Yes
          ▼
┌─────────────────────────────────┐  S38
│ CALCULATE ALL PERMUTATIONS OF    │
│ OPERATIONS LISTED IN moveds[dim] │
└─────────────────────────────────┘
          │
          ▼
         END
```

**EP 2 960 788 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005310139 A
- JP 2010257056 A
- JP 2010267025 A